# FASCICULE DE BREVET EUROPEEN

(11) **EP 1 921 521 B1**
(45) Date de publication et mention de la délivrance du brevet: **12.01.2011**
(21) Numéro de dépôt: 06123971.1
(22) Date de dépôt: 13.11.2006
(51) Int. Cl.: G04C 3/12, H02N 1/00

(54) **Micromoteur MEMS et pièce d'horlogerie équipée de ce micromoteur**
MEMS-Mikromotor und mit diesem Mikromotor ausgerüstete Uhr
MEMS micromotor and timepiece equipped with this micromotor

(43) Date de publication de la demande: 14.05.2008
(73) Titulaire: ETA SA Manufacture Horlogère Suisse, 2540 Grenchen (CH)
(72) Inventeur: Paratte, Lionel, 2000, Neuchâtel (CH); Noell, Wilfried, 2000, Neuchâtel (CH); Rebeaud, Jean-Philippe, 2088, Cressier (CH); Golay, Nicolas, 2000, Neuchâtel (CH); Pétremand, Yves, 1400, Yverdon-les-Bains (CH); Zanetta, André, 2000, Neuchâtel (CH); Blondeau, Fabien, 2525, Le Landeron (CH); Meister, Pierre-André, 2502, Biel (CH)
(74) Mandataire: Ravenel, Thierry Gérard Louis

(56) Documents cités:
- EP-A1- 0 403 179
- FR-A1- 2 874 907
- GB-A- 2 293 662
- US-A1- 2005 100 748
- US-B1- 6 211 599
- US-B1- 6 402 969

## Description

La présente invention concerne un micromoteur du type MEMS (Micro Electro Mechanical System) et une pièce d'horlogerie équipée de ce micromoteur.

L'invention concerne plus particulièrement un micromoteur MEMS réalisé dans une plaque en matériau cristallin ou amorphe, notamment à base de silicium, qui comprend une couche inférieure constituant un substrat, et une couche supérieure dans laquelle est gravée au moins un actionneur et un rotor, l'actionneur entraînant en rotation le rotor autour d'un arbre cylindrique.

Le rotor d'un micromoteur MEMS électrostatique à entraînement par cliquets doit être guidé précisément en rotation, de façon à permettre aux cliquets de fonctionner correctement. Une façon classique est de former un axe fixe intégré, réalisé en même temps que le rotor et son alésage. Un tel exemple est décrit dans le document WO 2004/081695.

Le document US6211599 révèle un autre micromoteur MEMS, pourvu d'un actuateur électrostatique couplé à des ressorts exerçant un couple de rappel pour ramener les bras de l'actuateur en position de repos.

Le jeu radial alésage-axe d'un rotor à axe intégré ne peut être inférieur à la tranchée minimum réalisable dans une technologie de gravure plasma profonde dite DRIE (Deep Reactive Ion Etching), généralement 5 microns pour 80 microns d'épaisseur. D'autre part, le frottement latéral silicium sur silicium est élevé (µ=0.4).

L'invention vise à résoudre ces problèmes de manière simple et économique.

Dans ce but, l'invention propose un micromoteur du type mentionné précédemment, caractérisé en ce que l'arbre est rapporté sur la plaque, en ce que l'arbre est étagé et s'étend axialement à travers un trou de la plaque, et en ce que l'arbre est serré et centré dans le trou au moyen de structures élastiques de fixation qui sont réalisées par gravure dans le substrat et qui sont agencées sur le pourtour du trou.

Selon d'autres caractéristiques de l'invention:
- le rotor est guidé en rotation par la paroi axiale externe de l'arbre;
- la paroi axiale externe de l'arbre est pourvue d'un revêtement minimisant les frottements avec le silicium;
- l'arbre est un axe métallique décolleté;
- la plaque est du type Silicon On Insulator;
- le rotor est pourvu d'une denture à dents de scie et l'actionneur entraîne le rotor au moyen d'un cliquet qui coopère avec les dents de scie;
- le micromoteur comporte un pignon qui est coaxial au rotor et qui est lié en rotation au rotor au moyen de goupilles reçues dans des fenêtres aménagées dans l'épaisseur du rotor, et le pignon est guidé en rotation par l'arbre;
- il est prévu, en plus des structures élastiques de fixation, un moyen de fixation complémentaire pour la fixation de l'arbre dans la plaque, notamment une colle ou une soudure.

L'invention propose aussi une pièce d'horlogerie comportant un rouage entraîné en rotation par un micromoteur réalisé selon l'une des caractéristiques précédentes.

D'autres caractéristiques et avantages de la présente invention apparaîtront plus clairement à la lecture de la description détaillée qui suit, faite en référence aux dessins annexés donnés à titre d'exemple non limitatifs et dans lesquels :
- la figure 1 est une vue en coupe qui représente schématiquement une pièce d'horlogerie réalisée conformément aux enseignements de l'invention;
- la figure 2 est une vue en perspective qui représente partiellement le mouvement de la pièce d'horlogerie de la figure 1 équipé d'un module d'entraînement comportant un micromoteur MEMS;
- la figure 3 est une vue de dessus qui représente schématiquement le module d'entraînement de la figure 2;
- la figure 4 est une vue en perspective éclatée qui représente le module d'entraînement de la figure 2 et le boîtier enveloppant ce module d'entraînement;
- la figure 5 est une vue agrandie en coupe axiale suivant le plan 5-5 qui représente schématiquement une portion du module d'entraînement et qui illustre le montage à rotation d'un pignon et d'un rotor du micromoteur autour d'un arbre;
- la figure 6 est une vue en coupe axiale schématique suivant le plan X'X qui illustre l'entraînement du pignon par le rotor au moyen de goupilles;
- la figure 7 est une vue de dessus schématique qui illustre l'entraînement du pignon par le rotor au moyen de goupilles;
- la figure 8 est une vue en coupe axiale schématique suivant le plan X'X qui illustre une variante du montage de l'arbre par rapport au rotor;
- la figure 9 est une vue de dessous qui représente schématiquement les structures élastiques de fixation qui sont aménagées dans la plaque pour le serrage et le centrage de l'arbre selon le montage de la figure 8;
- la figure 10 est une vue de dessus qui représente schématiquement un wafer en silicium et qui illustre un exemple d'agencement de plusieurs micromoteurs sur le wafer.

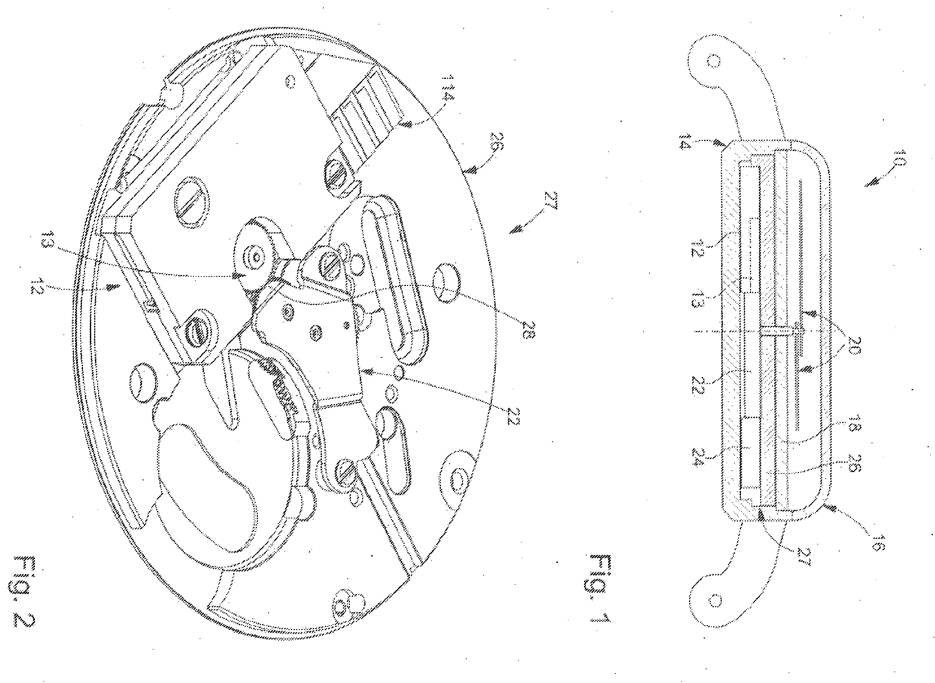

Sur la figure 1, on a représenté schématiquement une pièce d'horlogerie 10 constituée par une montre-bracelet équipée d'un module d'entraînement 13 conforme aux enseignements de l'invention, le module d'entraînement 13 étant ici agencé à l'intérieur d'un boîtier 12.

La pièce d'horlogerie 10 comporte une boîte de montre 14 fermée par une glace 16, un cadran 18, et des moyens d'affichage analogique constituées ici par des aiguilles 20. Les aiguilles 20 sont prévues pour être entraînées en rotation par le module d'entraînement 13 selon l'invention, via un rouage 22 comportant, par exemple, des moyens de démultiplication. Le module d'entraînement 13 est alimenté en énergie électrique par une pile 24. Le boîtier 12, le module d'entraînement 13, le rouage 22, et la pile 24 sont ici montés sur une platine 26 et forment ensemble le mouvement 27 de la pièce d'horlogerie 10, ce mouvement 27 étant fixé à l'intérieur de la boîte de montre 14. Bien entendu, le mouvement 27 comporte d'autres éléments (non représentés), en particulier un module électronique comportant un circuit intégré, une base de temps comportant un quartz, une plaque à circuits imprimés etc.

Sur la figure 2, on a représenté une partie du mouvement 27 de la pièce d'horlogerie 10, en particulier la platine 26 sur laquelle sont montés le boîtier 12 et le rouage 22.

Le module d'entraînement 13 est destiné à engrener avec une roue horlogère dite roue d'entrée 28 du rouage 22.

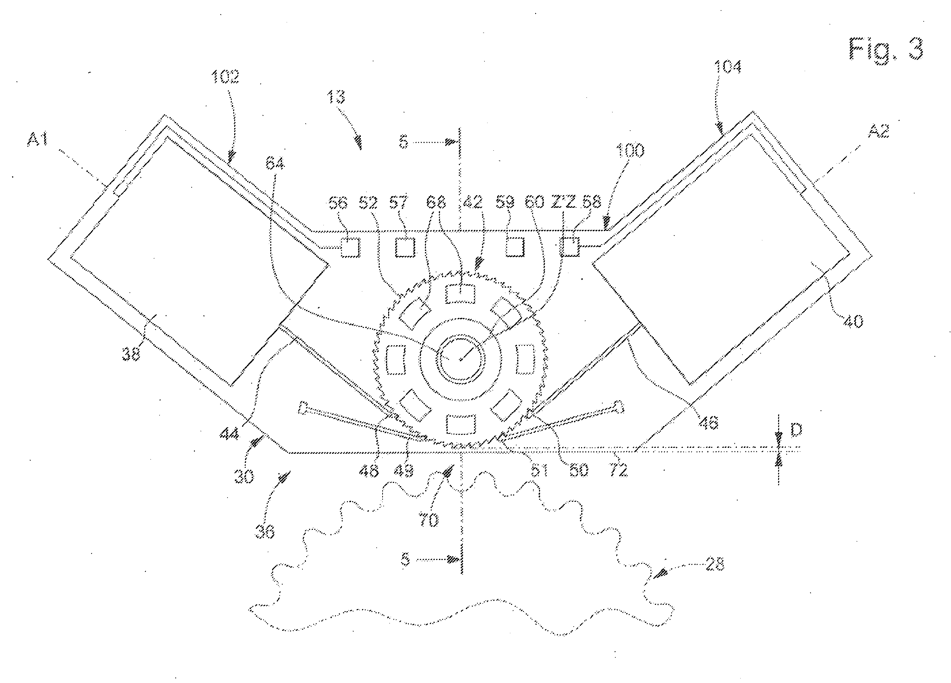

Les différents éléments du module d'entraînement 13 selon l'invention sont représentés plus en détail sur les figures 3 à 7.

Le module d'entraînement 13 comporte une plaque 30 en matériau cristallin ou amorphe, par exemple du silicium, comprenant une couche inférieure qui constitue un substrat 32, et une couche supérieure 34 dans laquelle est gravée un micromoteur 36 du type MEMS (Micro ElectroMechanical System). Le micromoteur 36 est constitué ici par deux actionneurs 38, 40 entraînant en rotation un rotor 42 gravé dans la couche supérieure 34.

Chaque actionneur 38, 40 comporte un stylet 44, 46 mobile suivant une direction A1, A2 parallèle au plan de la plaque 30. Chaque stylet 44, 46 est muni à son extrémité libre d'un cliquet 48, 50 prévu pour coopérer avec une denture 52 à dents de scie aménagée sur le bord périphérique extérieur du rotor 42 en vue de l'entraîner en rotation séquentiellement.

De préférence, chaque stylet 44, 46 s'étend suivant une direction A1, A2 qui coupe l'actionneur 38, 40 associé en deux parties globalement symétriques. De préférence, un premier actionneur 38 comporte un cliquet de poussée 48 et un second actionneur 40 comporte un cliquet de traction 50.

Chaque actionneur 38, 40 est ici du type électrostatique à peignes interdigités et réalisé par gravure dans la plaque 30 en silicium. La plaque 30 est ici du type Silicon On Insulator (SOI) et comprend une couche inférieure 32 épaisse de substrat en silicium, une couche intermédiaire 54 d'oxyde de silicium , et une couche supérieure 34 en silicium d'épaisseur inférieure au substrat 32.

La partie fixe de chaque actionneur 38, 40 comporte une plage 56, 58 d'alimentation prévue pour être raccordée électriquement au module électronique, et la partie mobile de chaque actionneur 38, 40 comporte une plage de contact 57, 59 qui place ces parties mobiles à un potentiel déterminé, ici à zéro Volts.

Un micromoteur comportant des actionneurs électrostatiques réalisés dans une plaque en silicium est décrit et représenté, par exemple, dans le document WO 2004/081695, incorporé ici par référence. Dans ce document, le moteur est réalisé par gravure dans une couche de silicium. Il comporte une roue d'entraînement dentée et des doigts d'actionnement qui coopèrent avec les dents de la roue pour provoquer sa rotation. Chaque doigt d'actionnement est solidaire en déplacement d'un peigne mobile qui se déplace par rapport à un peigne fixe en fonction d'une tension appliquée sur le peigne fixe.

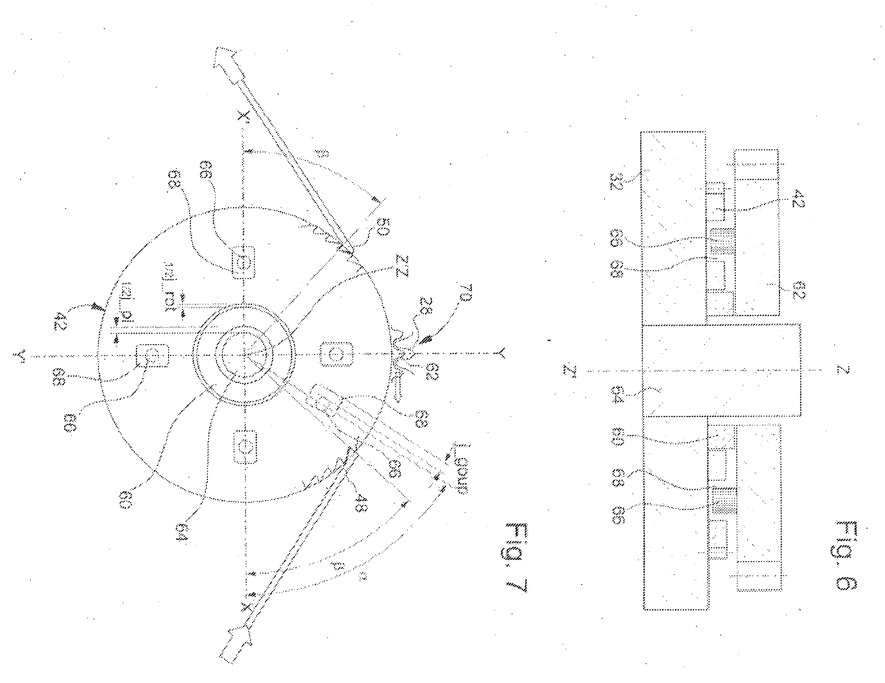

Un mode de réalisation utilisant une plaque SOI est décrit en référence aux figures 7A à 7D dans le document mentionné ci-dessus.

Selon un mode de réalisation avantageux, chaque actionneur 38, 40 est associé à un cliquet passif 49, 51 dont la zone d'encliquetage est située entre la zone d'engrènement 70 et la zone d'encliquetage du cliquet associé. Ces cliquets passifs 49, 51 sont maintenus élastiquement engrenés avec le rotor 42 de manière à assurer un positionnement angulaire précis, notamment au cours des phases d'entraînement, lorsque les autres cliquets 48, 50 se déplacent.

Selon le mode de réalisation représenté sur les figures 3 à 7, le rotor 42 est guidé par un palier 60 lisse central intégré ou cheminée, réalisé en même temps que les cliquets 48, 50, et ayant un jeu diamétral situé entre 4 et 10 microns, limite inférieure approximative correspondant à une couche de silicium épaisse de 80 microns. Les cliquets 48, 50 fonctionneront bien s'ils agissent sur une course tangentielle significativement supérieure à ce jeu, soit typiquement entre 20 et 100 microns. Ceci correspond bien à la gamme de courses possibles avec un guidage des stylets 44, 46 par ressorts de flexion (non représentés).

Le couple du rotor 42 est transmis à un pignon 62 par un système apparenté à une manivelle. Le pignon 62 situé juste au-dessus du rotor 42, est coaxial à ce dernier et il est guidé par un arbre 64 central. Le pignon 62 est doté de goupilles 66, engagées dans des fenêtres 68 du rotor 42. Des jeux de fonctionnement j_goup, j_rot, j_pi sont ménagés entre les divers éléments du rotor 42 et du pignon 62 comme représentés sur le schéma de la figure 7. Ainsi rotor 42 et pignon 62 sont couplés angulairement, mais indépendants latéralement : les jeux dans le plan xy sont repris par le palier 60 pour le rotor 42 et par l'arbre 64 pour le pignon 62. Ainsi la force de réaction latérale due à la charge n'est pas reprise par le palier 60 au niveau du rotor 42, mais par le guidage du pignon 62 par l'arbre 64. Ainsi les éléments microfabriqués du micromoteur 36 sont protégés des forces plus grandes exercées par les éléments horlogers, en cas de chocs par exemple.

Le pignon 62 est prévu pour engrener avec la roue d'entrée 28 du rouage 22 dans une zone d'engrènement 70 située à proximité d'un bord périphérique extérieur 72 de la plaque 30.

Selon une caractéristique avantageuse, le rotor 42 est agencé sur la plaque 30 de manière à minimiser la distance D entre la denture 52 du rotor 42 et le bord périphérique extérieur 72 de la plaque 30 correspondant à la zone d'engrènement 70. De plus, le diamètre extérieur du pignon 62 est légèrement supérieur à celui du rotor 42 de manière à être en porte-à-faux par rapport à la plaque 30 dans la zone d'engrènement 70.

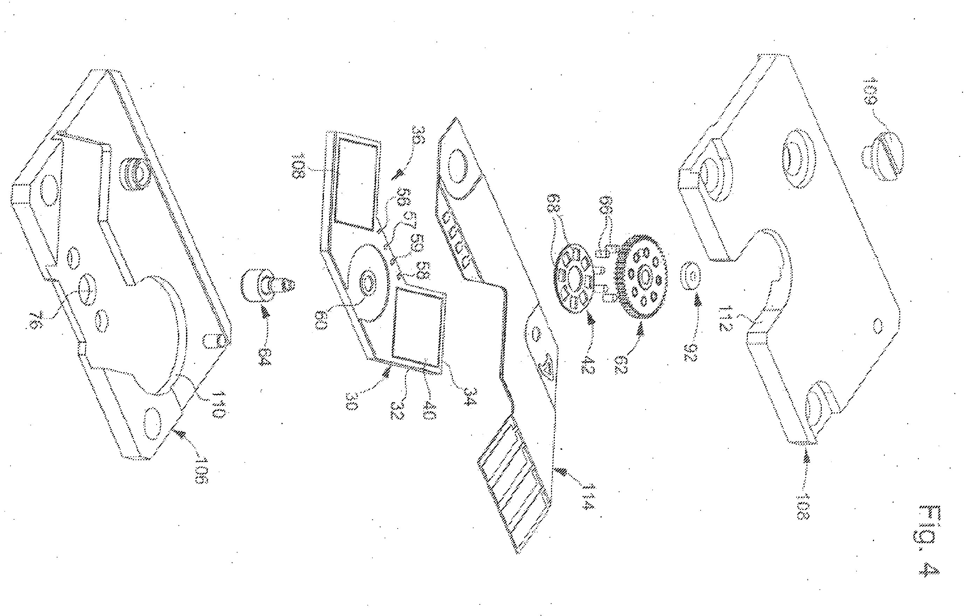

Pour simplifier le schéma de la figure 7, on a représenté un rotor 42 comportant seulement quatre fenêtres 68 et un pignon 62 comportant seulement quatre goupilles 66. Selon un mode de réalisation avantageux, tel qu'illustré notamment par les figures 3 et 4, il est prévu huit fenêtres 68 et huit goupilles 66.

Selon un mode de réalisation préféré, la position angulaire de la zone d'encliquetage de chaque cliquet 48, 50 avec le rotor 42 est décalée angulairement par rapport à la zone d'engrènement 70. La zone d'encliquetage de chaque cliquet 48, 50 forme un angle β avec l'axe x'x. α représente l'angle, à un instant donné, entre le rayon passant par la goupille 66 qui est en appui, en prise, contre le bord de sa fenêtre 68, et l'axe x'x (figure 7).

Ensuite, un choix judicieux de l'ensemble des paramètres {α, β, j_rot, j_pi, j_goup} pour des rayons de pignon 62, de rotor 42 et du cercle de goupilles 66 donnés favorisera le rendement de la transmission de l'énergie mécanique depuis le rotor 42 vers le pignon 62. Ainsi, pour un cas particulier de l'invention ayant β = 45°, si les jeux sont bien ajustés, le rendement pour un système à quatre goupilles avoisine les 85%, ce qui améliore le rendement par rapport à un cas où le rotor 42 et le pignon 62 sont collés l'un à l'autre. En effet, dans ce dernier cas toute la charge se retrouverait sous forme de frottement silicium-silicium latéral au niveau du palier 60, et vertical entre la périphérie du rotor 42 et le substrat 32 à cause du couple de basculement. Or le frottement silicium-silicium est plutôt défavorable, avec des coefficients secs statiques approchant 0,4.

Cette solution de transmission permet encore de varier le diamètre du pignon 62 afin d'adapter les couples et les vitesses, selon les charges. De plus, si le pignon 62 est assez grand et dépasse du bord périphérique 72 de la plaque 30, l'engrènement par la tranche s'en trouve simplifié, et le module d'entraînement 13 peut être assemblé sur la platine 26 de la pièce d'horlogerie 10 de façon modulaire, c'est-à-dire sans démonter/remonter la roue 28 entraînée.

Selon différentes variantes :
- le rotor 42 est microfabriqué en place, et sur le même substrat 32 que les actionneurs 38, 40, afin de garantir un appairage au palier 60 et aux cliquets;
- une autre variante consiste à fabriquer un rotor 42 séparément, sur le même wafer ou sur un autre wafer, ce rotor 42 étant ensuite assemblé sur la plaque 30 ou stator. Ceci permet une réduction du jeu radial si désiré dans le cas où le rotor est guidé par le palier 60;
- une famille de variantes est constituée par des rotors 42 et/ou des pignons 62 microfabriqués par d'autres procédés que l'usinage DRIE (découpe laser, EDM, LIGA, microinjection, etc.) puis assemblés sur la plaque 30 au stator;
- une autre famille de variantes est constituée de goupilles 66 formées par un deuxième niveau photolithographique dans le pignon 62 et/ou dans le rotor 42.

Le module d'entraînement 13 selon l'invention permet une modularité accrue pour l'adaptation à la charge, en permettant l'utilisation de pignons 62 de divers diamètres, sans modifier le reste du module 13. On obtient aussi une modularité accrue pour l'assemblage car l'interface mécanique pour la liaison au rouage 22 horloger est déjà existante grâce à la présence du pignon 62, intégré au module d'entraînement 13 et lié en rotation au micromoteur 36.

Le pignon 62 peut être réalisé en métal tel que du laiton, avec des goupilles 66 rapportées réalisées aussi en métal. Le pignon 62 peut aussi être réalisé d'une seule pièce avec les goupilles 66 par moulage en matériau plastique. Une réalisation du pignon 62 en matériau plastique avec des goupilles 66 métalliques surmoulées est aussi envisageable.

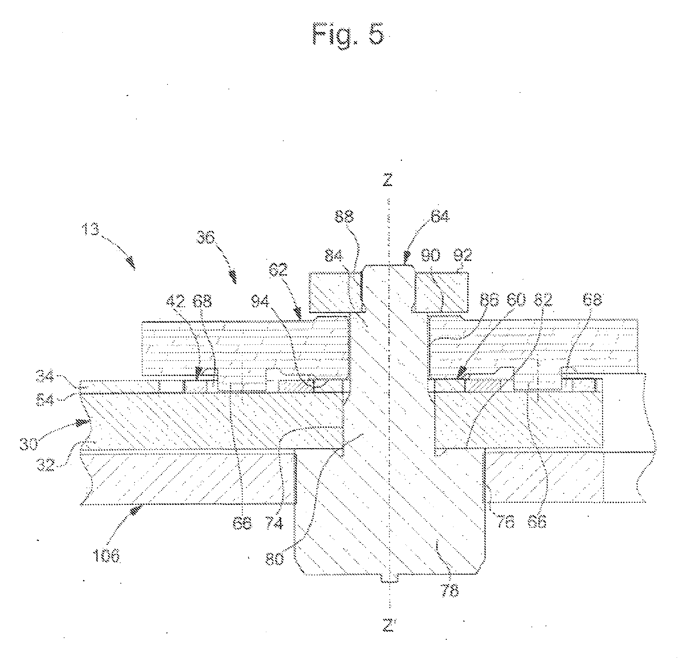

Selon le mode de réalisation représenté notamment sur les figures 4 et 5, l'axe de rotation du pignon 62 est constitué par un arbre 64 étagé en métal décolleté qui est inséré dans la plaque 30 à travers un premier trou 74 réalisé dans le substrat 32 et qui est chassé dans un second trou 76 réalisé dans une platine 106 du boîtier 12. Dans ce mode de réalisation, les efforts radiaux appliqués sur l'arbre 64 sont repris par la platine 106.

L'arbre 64 comporte un tronçon d'extrémité inférieure 78 qui délimite avec un tronçon intermédiaire inférieur 80 une première surface d'épaulement 82 orientée vers le haut et venant en butée axiale contre la face inférieure de la plaque 30. Le tronçon intermédiaire inférieur 80 a un diamètre sensiblement égal au diamètre du premier trou 74 et il s'étend dans ce trou 74. L'arbre comporte un tronçon intermédiaire supérieur 84 de diamètre légèrement inférieur au tronçon intermédiaire inférieur 80 adjacent et qui s'étend dans l'alésage 86 du pignon 62 pour le guider en rotation. Le tronçon intermédiaire supérieur 84 délimite avec le tronçon d'extrémité supérieure 88 une seconde surface d'épaulement 90 contre laquelle est maintenue en appui axial une bague de fixation 92 qui est chassée sur le tronçon d'extrémité supérieure 88.

Comme le guidage en rotation du rotor 42 est réalisé par le palier 60, qui est réalisé par un procédé photolithographique de gravure de la même manière que premier trou 74 qui détermine le centrage de l'arbre 64 par rapport au palier 60, on obtient un très bon centrage de l'arbre 64, du pignon 62, du palier 60 et du rotor 42.

De plus, la face inférieure du pignon 62 comporte, en vis-à-vis du palier 60, un bossage 94 qui empêche le pignon 62 de venir en appui axial contre le rotor 42, notamment en cas de basculement, ce qui évite une détérioration du rotor 42.

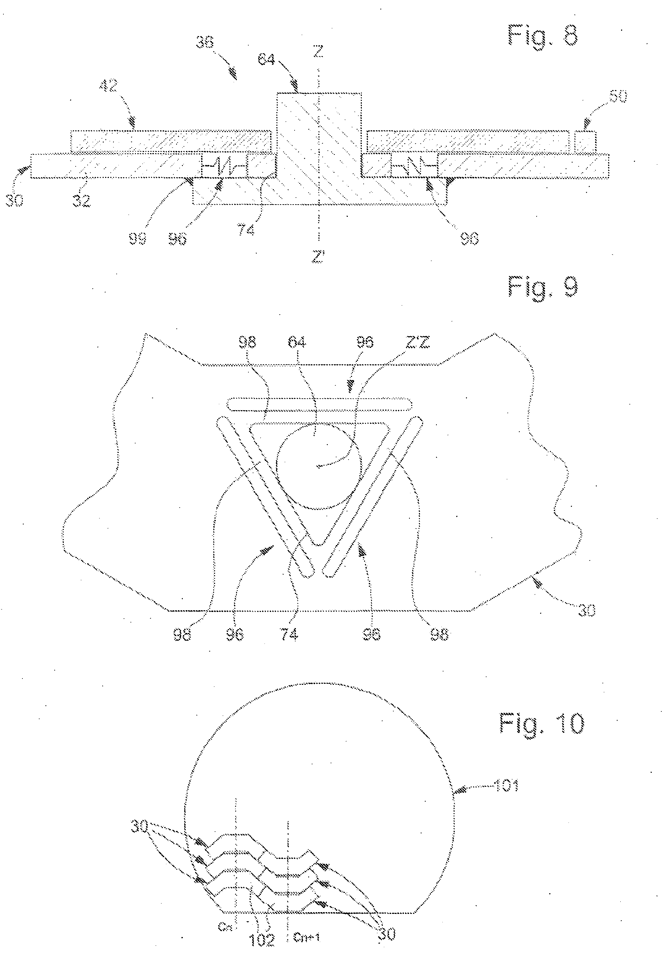

Sur les figures 8 et 9, on a représenté un autre mode de réalisation avantageux dans lequel l'arbre 64 est monté dans la plaque 30 à la manière d'un chassage au moyen de structures élastiques de fixation 96 aménagée dans le substrat 32 autour du premier trou 74. Dans ce mode de réalisation, les efforts radiaux appliqués sur l'arbre 64 sont repris par le substrat 32 et donc par les structures élastiques de fixation 96.

Les structures élastiques de fixation 96 sont constituées ici par des lames flexibles 98 lithographiées dans la face arrière de la plaque 30. La lithographie de la face avant, pour la couche supérieure 34 comportant les cliquets 48, 50 et le rotor 42, étant également alignée et centrée très précisément par rapport à la lithographie de la face arrière (erreur inférieure à 1 micron), il en résulte un guidage et un centrage plus précis qu'avec un axe réalisé d'une seul pièce avec la plaque 30, puisque le jeu radial peut être également réduit à un micron.

Grâce à cet alignement et ce centrage précis, il est possible de supprimer le palier 60 de sorte que le rotor 42 est alors guidé en rotation directement par l'arbre 64. Ainsi l'arbre 64 peut guider en rotation à la fois le rotor 42 et le pignon 62. Comme l'arbre 64 est réalisé par décolletage, ce qui permet d'obtenir des tolérances de fabrication très restreintes, on obtient un assemblage très précis, ce qui assure notamment un fonctionnement fiable des actionneurs 38, 40. Le rotor 42 est alors guidé par la paroi axiale externe de l'arbre 64.

L'arbre 64 peut être finalement fixé dans la plaque 30 par un moyen de fixation complémentaire, par exemple par soudage au substrat 32 au moyen d'un cordon de soudure 99 qui est représenté sur la figure 8, ou encore par collage.

Les problèmes de frottement contre l'arbre 64 peuvent être résolus par déposition d'une couche mince solide sur la paroi axiale externe de l'arbre 64 permettant de diminuer le frottement entre les pièces.

Les structures élastiques de fixation 96 peuvent être choisies notamment parmi les exemples décrits et représentés dans le document CH 695 395 ou parmi d'autres structures qui peuvent assurer un centrage précis et un serrage de l'arbre 64 sur la plaque 30, par exemple des structures constituées de languettes flexibles à extrémités libres.

Avantageusement, en considérant notamment la figure 3, les actionneurs 38, 40 décrivent entre eux un angle d'environ quatre-vingt-dix degrés, la bissectrice de cet angle passant par la zone d'engrènement 70 et par l'axe de rotation z'z du rotor 42, de sorte que le module d'entraînement 13 a une forme générale en "V" définie par le contour extérieur de la plaque 30, ce contour étant optimisé.

La plaque 30 comporte une portion centrale 100 qui porte le rotor 42 et deux portions latérales 102, 104. Le contour extérieur de la plaque 30 correspond globalement à l'intersection de deux rectangles, qui sont orthogonaux entre eux et qui forment les deux portions latérales 102, 104, avec un rectangle transversal, qui forme la portion centrale 100, le rectangle transversal décrivant un angle de quarante-cinq degrés par rapport à chacun des deux autres rectangles. La majeure partie de la surface de chaque portion latérale 102, 104 est occupée par un actionneur 38, 40 alors que la majeure partie de la surface de la portion centrale 100 est occupée par le rotor 42. La zone d'engrènement 70 est agencée à proximité d'un des bords périphériques 72 de la portion centrale 100.

De préférence, les plages 56, 57, 58, 59 sont agencées sur la portion centrale 100, du côté opposé à la zone d'engrènement 70 par rapport à l'axe z'z du rotor 42.

On note que la forme en "V" du module d'entraînement 13 présente l'avantage de permettre une optimisation du rendement du micromoteur 36 par rapport à la surface de la plaque 30 utilisée, et une optimisation de la surface de matériau cristallin ou amorphe utilisée pour réaliser les micromoteurs 36 et les modules d'entraînement 13. Ainsi, lorsque la plaque 30 est réalisée à partir d'un wafer 101 en silicium, comme schématisé sur la figure 10, la forme en "V" permet une réplication imbriquée des plaques 30 sur la surface du wafer pour maximiser le nombre de micromoteurs 36 obtenus à partir d'une surface donnée de silicium. En particulier, selon l'exemple représenté sur la figure 10, les plaques 30 peuvent être rangées sur le wafer en colonnes parallèles à la manière de chevrons, deux colonnes Cn, Cn+1 adjacentes étant orientées dans des sens opposés. De plus, deux plaques 30 adjacentes de deux colonnes Cn, Cn+1 adjacentes ont leurs portions latérales 102 adjacentes qui sont alignées.

De préférence, l'angle décrit par les deux actionneurs 38, 40 est compris entre quatre-vingt-dix et cent quarante degrés. Plus l'angle est important, plus l'imbrication des plaques 30 sur le wafer 101 est optimisée, mais les angles importants nécessitent de déporter les stylets 44, 46 des actionneurs 38, 40 par rapport à leurs axes de symétrie A1, A2 respectifs, ce qui pénalise l'efficacité mécanique des actionneurs 38, 40.

Selon le mode de réalisation représenté sur les figures, le boîtier 12 qui contient le module d'entraînement 13 comporte une platine inférieure 106 prévue pour être fixée sur un élément de la pièce d'horlogerie 10, ici sur la platine 26 du mouvement, et la plaque 30 du module d'entraînement 13 est montée sur la platine inférieure 106. Le boîtier 12 comporte un capot 108 de protection qui recouvre le module d'entraînement 13, qui est fixé sur la platine inférieure 106, ici au moyen d'une vis 109, et qui retient le module d'entraînement 13 contre la platine inférieure 106.

La face supérieure de la platine inférieure 106 comporte ici une creusure ou logement 110 dans lequel la plaque 30 du module d'entraînement 13 est reçue de manière sensiblement complémentaire.

Le capot 108 comporte une échancrure 112 ouverte dans un de ses bords périphériques extérieurs et le pignon 62 est logé dans cette échancrure 112 après montage du capot 108 sur la platine inférieure 106.

Avantageusement, un circuit imprimé 114 est intercalé entre la platine inférieure 106 et le capot 108 pour permettre le raccordement électrique du micromoteur 36, par ses plages 56, 57, 58, 59, au module électronique de la pièce d'horlogerie 10.

Selon une variante de réalisation (non représentée), le module d'entraînement 13 peut être monté directement sur la platine 26, ce qui permet de supprimer le boîtier 12, notamment pour minimiser le nombre de composants, pour faciliter l'assemblage du mouvement 27, et pour minimiser l'encombrement des moyens d'entraînement. Un élément de protection peut être prévu sur le module d'entraînement 13 pour protéger ses composants.

## Revendications

1. Micromoteur (36) MEMS réalisé dans une plaque (30) en matériau cristallin ou amorphe, notamment à base de silicium, qui comprend une couche inférieure constituant un substrat (32), et une couche supérieure (34) dans laquelle est gravée au moins un actionneur (38, 40) et un rotor (42), l'actionneur (38, 40) entraînant en rotation le rotor (42) autour d'un arbre (64) cylindrique, **caractérisé en ce que** l'arbre (64) est rapporté sur ladite plaque (30), **en ce que** l'arbre (64) est étagé et s'étend axialement à travers un trou (74) de la plaque (30), et **en ce que** l'arbre (64) est serré et centré dans le dit trou (74) au moyen de structures élastiques de fixation (96) qui sont réalisées par gravure dans le substrat (32) et qui sont agencées sur le pourtour du dit trou (74).

2. Micromoteur (36) selon la revendication précédente, **caractérisé en ce que** le rotor (42) est guidé en rotation par la paroi axiale externe de l'arbre (64).

3. Micromoteur (36) selon l'une quelconque des revendications précédentes, **caractérisé en ce que** la paroi axiale externe de l'arbre (64) est pourvue d'un revêtement minimisant les frottements avec le silicium.

4. Micromoteur (36) selon l'une quelconque des revendications précédentes, **caractérisé en ce que** l'arbre (64) est un axe métallique décolleté.

5. Micromoteur (36) selon l'une quelconque des revendications précédentes, **caractérisé en ce que** la plaque (30) est du type Silicon On Insulator.

6. Micromoteur (36) selon l'une quelconque des revendications précédentes, **caractérisé en ce que** le rotor (42) est pourvu d'une denture à dents de scie et **en ce que** l'actionneur (38, 40) entraîne le rotor (42) au moyen d'un cliquet (48, 50) qui coopère avec les dents de scie.

7. Micromoteur (36) selon l'une quelconque des revendications précédentes, **caractérisé en ce qu'**il comporte un pignon (62) qui est coaxial au rotor (42) et qui est lié en rotation au rotor (42) au moyen de goupilles (66) reçues dans des fenêtres (68) aménagées dans l'épaisseur du rotor (42), et **en ce que** le pignon (62) est guidé en rotation par l'arbre (64).

8. Micromoteur (36) selon l'une quelconque des revendications précédentes, **caractérisé en ce qu'**il est prévu, en plus des structures élastiques de fixation (96), un moyen de fixation complémentaire pour la fixation de l'arbre (64) dans la plaque (30), notamment une colle ou une soudure.

9. Pièce d'horlogerie (10) comportant un rouage (22) entraîné en rotation par le micromoteur (36) selon l'une des revendications précédentes.

## Claims

1. MEMS micromotor (36) produced in a plate (30) made of crystalline or amorphous material, in particular based on silicon, which comprises a lower layer forming a substrate (32), and an upper layer (34) in which at least one actuator (38, 40) and a rotor (42) is etched, the actuator (38, 40) driving the rotor (42) in rotation about a cylindrical shaft (64), **characterised in that** the shaft (64) is connected to said plate (30), **in that** the shaft (64) is stepped and extends axially through a hole (74) of the plate (30), and **in that** the shaft (64) is clamped and centred in said hole (74) by means of elastic fixing structures (96) which are produced by etching in the substrate (32) and which are arranged on the circumference of said hole (74).

2. Micromotor (36) according to claim 1, **characterised in that** the rotor (42) is guided in rotation by the external axial wall of the shaft (64).

3. Micromotor (36) according any of the preceding claims **characterised in that** the external axial wall of the shaft (64) is provided with a coating which minimises the friction with the silicon.

4. Micromotor (36) according to any of the preceding claims, **characterised in that** the shaft (64) is a profil-turned metallic axle.

5. Micromotor (36) according to any of the preceding claims, **characterised in that** the plate (30) is of the Silicon On insulator type.

6. Micromotor (36) according to any of the preceding claims, **characterised in that** the rotor (42) is provided with a ratchet toothing and **in that** the actuator (38, 40) drives the rotor (42) by means of a pawl (48, 50) which cooperates with the ratchet.

7. Micromotor (36) according to any of the preceding claims, **characterised in that** it comprises a pinion (62) which is coaxial with the rotor (42) and which is connected in rotation to the rotor (42) by means of pins (66) which are received in slots (68) provided in the thickness of the rotor (42), and **in that** the pinion (62) is guided in rotation by the shaft (64).

8. Micromotor (36) according to any of the preceding claims, **characterised in that**, in addition to the elastic fixing structures (96), a complementary fixing means is provided for fixing the shaft (64) in the plate (30), in particular an adhesive or a weld.

9. Timepiece (10) comprising a gear-train (22) which is driven in rotation by the micromotor (36) according to claim 1.

## Patentansprüche

1. MEMS Mikromotor (36), der in einer aus kristallem oder amorphem Material, insbesondere auf der Basis von Silizium, bestehenden Platte (30) ausgebildet ist, die eine untere, ein Substrat (32) bildende Schicht umfasst, und eine obere Schicht (34), in welche wenigstens ein Betätigungsglied (38,40) und ein Rotor (42) geätzt sind, wobei das Betätigungsglied (38,40) den Rotor (42) um eine zylindrische Welle (64) drehend antreibt, **dadurch gekennzeichnet, dass** die Welle (64) auf der besagten Platte (30) aufgesteckt ist, dass die Welle (64) gestuft ist, und sich axial durch ein Loch (74) der Platte (30) erstreckt, und dass die Welle (64) in dem Loch (74) mittels elastischer Befestigungsstrukturen (96) eingespannt und zentriert ist, die durch Ätzen in dem Substrat (32) realisiert sind, und an dem Umfangsrand des Lochs (74) angeordnet sind.

2. Mikromotor (36) gemäss Anspruch 1, **dadurch gekennzeichnet, dass** der Rotor (42) von der äusseren axialen Wand der Welle (64) in Drehrichtung geführt ist.

3. Mikromotor (36) gemäss einem der vorstehenden Ansprüche, **dadurch gekennzeichnet, dass** die äussere axiale Wand der Welle (64) mit einer Beschichtung versehen ist, die die Reibung mit dem Silizium minimiert.

4. Mikromotor (36) gemäss einem der vorigen Ansprüche, **dadurch gekennzeichnet, dass** die Welle (64) eine abgestochene Metall-Welle ist.

5. Mikromotor (36) gemäss einem der vorigen Ansprüche, **dadurch gekennzeichnet, dass** die Platte (30) vom Typ Silicon-On-Insulator ist.

6. Mikromotor (36) gemäss Anspruch 1, **dadurch gekennzeichnet, dass** der Rotor (42) mit einer Sägezahnung versehen ist, und dass das Betätigungsglied (38,40) den Rotor (42) mittels einer Sperrklinke (48,50), die mit der Sägezahnung zusammenwirkt, drehend antreibt.

7. Mikromotor (36) gemäss einem der vorigen Ansprüche, **dadurch gekennzeichnet, dass** er ein koaxial zum Rotor (42) verlaufendes Ritzel (62) umfasst, das über Stifte (66) drehfest mit dem Rotor (42) verbunden ist, die in Fenstern (68) aufgenommen sind, welche in der Dicke des Rotors (42) ausgebildet sind, und dass das Ritzel (62) von der Welle (64) in Drehrichtung geführt ist.

8. Mikromotor (36) gemäss einem der vorigen Ansprüche, **dadurch gekennzeichnet, dass** er ferner, zusätzlich zu den elastischen Befestigungsstrukturen (96), komplementäre Befestigungsmittel, zum Befestigen der Welle (64) in der Platte (30) umfasst, insbesondere ein Klebstoff oder eine Schweissung.

9. Uhr (10) mit einem Räderwerk (22), das durch den Mikromotor (36) gemäss Anspruch 1 in Drehrichtung angetrieben wird.
